# EUROPEAN PATENT APPLICATION

(11) **EP 2 003 003 A1**
(43) Date of publication of application: **17.12.2008**
(21) Application number: 08380158.9
(22) Date of filing: 20.05.2008
(51) Int. Cl.: B60H 1/24

(54) **Device for controlling the aeration in vehicle interiors**

(30) Priority: 12.06.2007 ES 200701258 U
(71) Applicant: Seat, S.A., 08760 Martorell - Barcelona (ES)
(72) Inventor: Fabón Resina, Lucia c/o Seat S.A., 08760 Martorell Barcelona (ES); Pradas González, Angel c/o Seat S.A., 08760 Martorell Barcelona (ES); Geue, Michael c/o Seat S.A., 08760 Martorell Barcelona (ES)
(74) Representative: Carvajal y Urquijo, Isabel

(57) **Abstract**

The invention relates to a device for controlling the aeration in vehicle interiors, intended to be assembled in an opening made in the chassis or wall of the interior, comprising a frame (1) which can be fixed in the mentioned opening, a hatch (2) assembled in said frame (1) in a position parallel thereto, and drive means for driving the hatch (2) for its travel in a direction perpendicular to the frame (1) between closed and open positions.

## Description

### Field of the Invention

The present invention relates to a device for controlling the aeration in vehicle interiors, which is based on a new air outlet concept for the interior, allowing a correct aeration thereof, as well as a good depressurization capacity and an optimal sound insulation.

### Background of the Invention

Air outlets intended to depressurize and air a vehicle interior currently consist of a classic assembly formed by a series of plastic sheets arranged on gaps made in the body which, due to the action of the pressure on them, allow the air to enter and exit the interior. These outlets are optionally covered by a casing allowing an improvement of the sound insulation.

This air outlet system, based on a purely mechanical system, has the drawback of its great lack of tightness, which implies that the air is constantly entering and exiting the interior, without this being necessary in some situations. This lack of tightness causes other adverse effects for the occupants, such as greater difficulty for controlling the temperature inside the vehicle due to the constant air renewal, or a deficient sound insulation, which can be annoying in some cases and which is attempted to be improved by means of installing large plastic casings. It must also be emphasized that the efficiency of current air outlets is not optimal, in some cases making use of an actual ventilation surface of less than 60%.

### Description of the Invention

The object of the present invention is to eliminate the problems set forth by means of a device with which the aeration and depressurization capacity of the vehicle interior can be improved, while at the same time an optimal sound insulation is achieved. The device of the invention further allows maintaining a comfortable temperature inside the interior, due to the fact that the air exchange with the outside occurs only when it is necessary.

Another advantage of the device of the invention is its simple constitution upon reducing the number of parts forming it, an optimization of costs and manufacturing and assembly times being achieved, without needing to study new gaps for its assembly, since the current designs can be used.

With the device of the invention an important improvement in the tightness of the interior can be achieved without negatively affecting the main objective of the air outlets or the comfort of the occupants at all.

The device of the invention is formed by a frame which can be fixed in an opening or gap of the body or wall of the interior, by a hatch which is assembled in said frame in a position parallel thereto, and by drive means for driving the hatch by means of which its travel in a direction perpendicular to the frame between closed and open positions is achieved, i.e. the hatch travels parallel to itself between the mentioned closed and open positions.

The hatch is connected to the frame by means of guide elements directing said hatch in its travel between the closed and open positions. These guide means can consist of projections projecting from the hatch on the side aimed towards the frame, and of passageways which said frame has, coinciding in number and position with the projections of the hatch, for the passage of said projections.

The projections will have a length greater than the travel of the hatch, such that upon passing through the mentioned passageways they can be used to direct the travel of the hatch between a closed position, in which it will be supported against the frame, and an open position in which it will be separated therefrom.

With regard to the drive means for driving the hatch, they comprise an electric motor the activation of which is controlled by means of door opening and pressure sensors. The drive means further include a transmission mechanism which is formed by a gear ring which can be driven by the motor, and by a central spindle perpendicularly projecting from the hatch, integral therewith and engaging with the gear ring.

With the mentioned constitution, the device of the invention is electronically controlled by means of pressure sensors which will be located at different points of the interior and which, upon detecting the established pressure parameter, open the hatch and allow the depressurization and aeration of the interior. Another necessary sensor for the correct operation of the system is the door opening sensor, which will give the order to open the hatch if the opening of any of the doors is detected. With this sensor accidental slamming is prevented from damaging the ears of the occupants. The opening and closing of the hatch occurs due to the action of the electric motor which, through the gear ring, engages with the spindle, moving the hatch parallel to itself in order to move closer to or further from the frame. Once the hatch is open, air is allowed to enter and exit the interior in a controlled manner since, as it is an electric system, the opening and closing of the hatch can be varied according to the needs. Once the aeration of the interior has ended the hatch is closed, forming a completely solid and tight assembly which will improve the comfort of the vehicle interior, since a good sound insulation is provided.

### Brief Description of the Drawings

An embodiment, given by way of a non-limiting example, is shown in the attached drawings, with the aid of which the advantages and features of the invention can be better understood.

In the drawings:
Figure 1 is an upper perspective view of a device for controlling the aeration in vehicle interiors formed according to the invention, in an open position.
Figure 2 is an upper plan view of the frame forming part of the device of the invention.
Figures 3 and 4 are longitudinal sections of the device, in an open and closed position, respectively, taken according to section line A-A of Figure 2.

As can be seen in the drawings, the device is formed by a frame 1 and a hatch 2 which is assembled in said frame in a position parallel thereto, this hatch being able to travel in a direction perpendicular to the frame between open and closed positions.

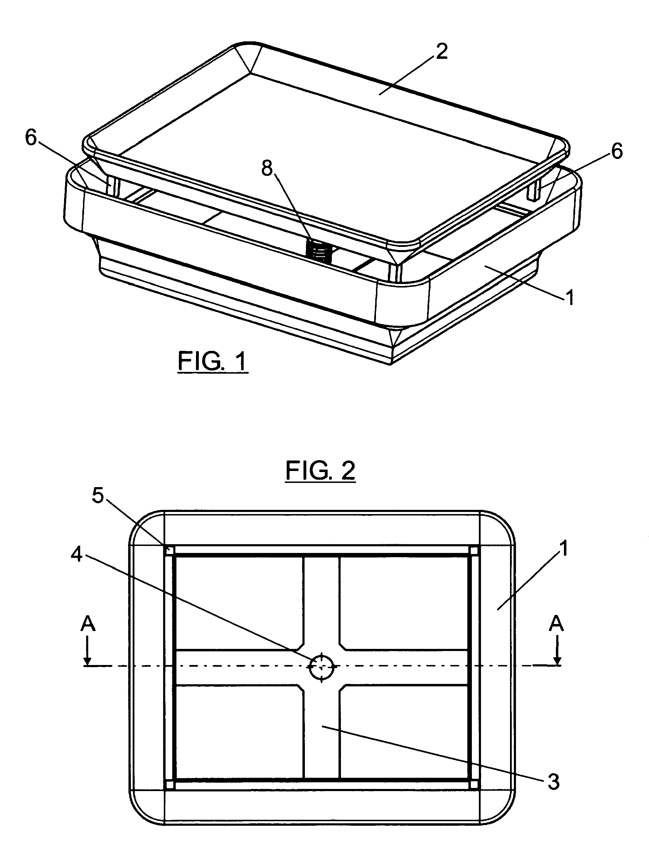

As can be better observed in Figure 2, the frame 1 is crossed by two arms 3 which are useful as reinforcing means and have a central orifice 4. The frame 1 further has passageways 5 at its corners.

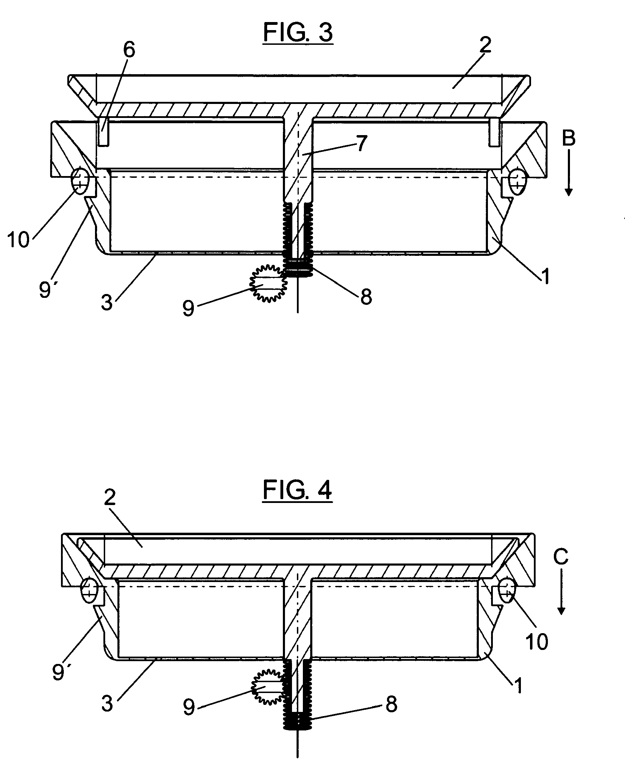

The tray 2 has a contour coinciding with that defined by the frame 1 and has, on the side aimed towards said frame, projections 6 coinciding in position and number with those of the passageways 5 of the frame 2. The projections 6 will have a length greater than the possibility of travel of the tray 4. The projections 6 and passageways 5 thus determine guide means for directing the tray 2 in its travel between the open and closed positions shown in Figures 3 and 4.

As can be observed in Figures 3 and 4, a central rod or core 7 projects from the tray 2, on the side opposite the frame 1, ,which rod or core forms at its end portion a spindle 8 engaging with a gear ring 9 which can be driven by means of an electric motor, not shown. The ring 9 can rotate in both directions by means of the mentioned electric motor, and upon engaging with the spindle 8 it will cause the travel of the rod 7 and therefore of the hatch 2 in a direction perpendicular to the frame 1, in direction B of Figure 3 for closing the hatch and in direction C of Figure 4 for opening it.

As can be seen in Figure 4, in the closed position the hatch 2 is supported and fitted against the seat defined by the frame 1, a sealing gasket being able to be exposed between both components in order to ensure a perfect closure.

The frame 1 can have an outer formation with a ramp step 9' for its assembly in the corresponding gap of the body or wall of the interior. A gasket 10 making the closure between the frame 1 and the contour of the gap hermetic and sealing it can furthermore be arranged, preventing the possible entrance of water.

The motor in charge of making the ring 9 rotate in one direction or another is controlled by means of a series of pressure sensors arranged inside the vehicle interior, in the positions which are considered most suitable. The motor is activated upon detecting the certain pressure parameter, driving the ring 9 causing the travel of the spindle 8 and therefore of the hatch 2 to open or close it. The hatch 2 will remain closed in order to insulate the vehicle interior from outside noise and possible infiltrations of water or other external agents to the interior. In the event that an air renewal or a depressurization of the vehicle interior is necessary, the hatch 2 is opened by means of the travel which is sufficient for fulfilling the objective. As has already been indicated, a sensor detecting when a door is opened must be placed in order to prevent damaging the ears of the occupants and for the correct closing of the doors, at which time the hatch 2 must be opened to prevent the sudden pressure change.

## Claims

1. A device for controlling the aeration in vehicle interiors intended to be assembled in an opening made in the chassis or wall of the interior, **characterized in that** it comprises a frame which can be fixed in the mentioned opening, a hatch assembled in said frame in a position parallel thereto, and drive means for driving the hatch for its travel in a direction perpendicular to the frame between closed and open positions; which hatch is connected to the frame by means of guide elements directing said hatch in its travel between the closed and open positions; and which drive means comprise an electric motor and a transmission mechanism for the travel of the hatch, the activation of the motor being controlled by means of door opening and pressure sensors.

2. A device according to claim 1, **characterized in that** the mentioned guide means consist of projections projecting from the hatch on the side aimed towards the frame, with a length greater than the travel of the hatch, and of passageways which said frame has, coinciding in number and position with the projections of the hatch, for the passage of said projections.

3. A device according to claim 1, **characterized in that** the mentioned transmission mechanism comprises a gear ring which can be driven by the motor, and a central spindle integral with the hatch perpendicularly projecting from said hatch and engaging with the ring.

4. A device according to claim 1, **characterized in that** the frame is crossed by at least one crosspiece having a central orifice through which the spindle traverses for its engagement with the ring.
